# NEW EUROPEAN PATENT SPECIFICATION

(11) **EP 3 728 459 B2**
(45) Date of publication and mention of the opposition decision: **09.12.2026**
(45) Mention of the grant of the patent: 15.11.2023
(21) Application number: 18816127.7
(22) Date of filing: 18.12.2018
(51) Int. Cl.: C08L 23/12

(54) **POLYPROPYLENE COMPOSITION FOR TAPES**
POLYPROPYLENZUSAMMENSETZUNG FÜR BÄNDER
COMPOSITION DE POLYPROPYLÈNE POUR RUBANS

(30) Priority: 22.12.2017 EP 17210351
(43) Date of publication of application: 28.10.2020
(73) Proprietor: SABIC Global Technologies B.V., 4612 PX Bergen op Zoom (NL)
(72) Inventor: VOETS, Patrick Elisabeth Luc, 6160 GA Geleen (NL); STEENBAKKERS-MENTING, Henrica, Norberta Alberta, Maria, 6160 GA Geleen (NL); ZUIDEVELD, Martin Alexander, 6160 GA Geleen (NL); MOMAN, Akhlaq, Riyadh 11422 (SA); VOIGTLÄNDER, Waltraud, 6160 GA Geleen (NL)
(74) Representative: Sabic Intellectual Property Group
(86) International application number: PCT/EP2018/085526
(87) International publication number: WO 2019/121701

(56) References cited:
- EP-A1- 2 527 376
- EP-A1- 2 913 350
- EP-B1- 3 728 406
- WO-A1-2014/152692
- WO-A1-2018/069541
- WO-A1-2019/121701
- JP-A- 2003 048 996
- US-A1- 2011 014 449
- US-A1- 2012 108 771
- US-A1- 2016 046 737
- US-A1- 2016 046 737
- US-B1- 6 350 828
- "Standard Test Method for Determining Molecular Weight Distribution and Molecular Weight Averages of Polyolefins by High Temperature Gel Permeation Chromatography", ASTM INTERNATIONAL, 15 December 2013 (2013-12-15), pages 1 - 6, XP093208630
- "Plastics — Determination of the melt mass-flow rate (MFR) and the melt volume-flow rate (MVR) of thermoplastics", ISO, 1 January 2005 (2005-01-01), pages 1 - 22, XP093208631
- Rheological Properties of Polypropylenes with Different Molecular Weight Characteristics. Mitsuyoshi Fujiyama et al., Jn. Appl. Polym.Sci.. Vol. 84. pp. 2128-2141 (2002)

## Description

The invention relates to a process for the preparation of a polypropylene composition comprising a propylene homopolymer or propylene-ethylene copolymer, and a process for the preparation of an article comprising said polypropylene composition, preferably a tape or strapping.

It is generally known that the industrially established tape products are currently made from polypropylene (PP) and polyethylene (PE); the three main applications being high modulus tapes, weaving tapes, baler twines and rope strands (see F. Hensen, Man-Made Fiber Year Book (CTI), 45-48, 1992). It is also commonly recognized that PP is the dominant synthetic polymer for uniaxially-oriented tapes from slit film; but high density polyethylene is also used. PP tape production has been established since the 1960s and occurs on a large scale world-wide. The article "Production of polyolefin tapes", F. Hensen, Man-Made Fiber Year Book (CTI), 45-48, 1992 reviews the technology for making uniaxially-oriented polypropylene and polyethylene tapes. The process for uniaxially oriented PP tapes comprises the steps of (1 ) extruding a film (or tape) into a water bath or a chill roller; (2) in case of a film, slitting the film into a plurality of tapes; (3) heating the tape(s) and stretching the tape(s) in an oven; (4) heat setting the tape(s) at a higher temperature and (5) winding each uniaxially-oriented tape on a bobbin.

A tape in general is understood to mean a ribbon of plastic film, whose thickness is very thin in relation to its length and width. In the polypropylene tape industry, the tape thickness is in the range of 0.02 to 0.10 mm (20 µm to 100 µm) and the width is from 1 to 60 mm [see for example K.J. Philips and T.K. Ghosh "The Technology of Polypropylene Tape Yarns : Processing and Applications", Textile Progress, Volume 33, (2003) , pages 1 - 53]. That is, the tape has a high width-to-thickness ratio. Typically the width is between 5-100 times larger than the thickness. The length of the tape can be indefinite, as the ribbons are normally made with a continuous extrusion process. The most common is to have a well-controlled rectangular cross-section, which is desirable for uniform drawing behaviour; however, profiled sections (corrugated, ribbed etc.) are also known (see K.J. Philips and T.K. Ghosh "The Technology of Polypropylene Tape Yarns : Processing and Applications").

Specific tape dimensions are established in the polypropylene tape industry, see F.

Hensen, Production of Polyolefin Tapes, CFI Man-made Fiber Year Book, 1992, pages 44-48; also, F. Hensen and Stausberg, chapter 9, "Extrusion of Film Tapes', pp 317, Plastics Extrusion Technology, Ed. F. Hensen, 2nd edition, Hanser, 1997.

Polypropylene based weaving tapes generally have thicknesses in the range of 30-80 µm and a width of 1 -3 mm. Polypropylene based strapping tape is exceptionally thick (300-600 µm) and generally has a width of between 4 and 16mm. A strapping tape is used to strap cartons and boxes.

In industry, there is a desire to down-gauge, in other words to use less material. However, such materials, even when used in smaller amounts (less thickness) should have similar mechanical properties. For tape applications, it is important that the stiffness is maintained when going to thinner tapes. In addition, a low gel count becomes more important for thinner tapes as defects in the tape will act as stress concentrations which may result in undesired early breakage of the tape.

A drawback of the currently available propylene homopolymers and propylene-ethylene copolymers for tapes, including strapping tapes are that the stiffness of the propylene homopolymers and propylene-ethylene copolymers does not allow to produce thinner tapes having sufficient stiffness. Furthermore, the currently available materials also have a too high gelcount, so that early breakage of the thinner tape occurs.

Therefore, it is an object of the invention to provide a process for the preparation of a polypropylene composition having a lower gel count (i.e. a decreased amount of gels) and a higher stiffness.

This object is achieved by a process for the preparation of a polypropylene composition of claim 1.

It has been found that the polypropylene compositions prepared by the process of the invention show a lower gel count and have a higher stiffness, which allows for the preparation of thinner tapes without decreasing the properties of the tape. In addition, the processability of the polypropylene compositions in an extruder may be improved.

The polypropylene composition prepared by the process of the invention has a melt flow rate in the range of 0.70 to 2.4 dg/min, preferably a melt flow rate of at least 0.80 dg/min and/or of at most 2.3 dg/min, preferably at most 2.0 dg/min as measured according to ISO1133 (2.16 kg/230°C). Preferably, the polypropylene composition prepared by the process of the invention has a melt flow rate in the range of 0.70 to 2.3 dg/min as measured according to ISO1133 (2.16 kg/230°C).

The ethylene content in the propylene-ethylene copolymer is relatively low, i.e. at most 1.0wt% based on the propylene-ethylene copolymer. For example the ethylene content is at least 0.1 wt%, for example at least 0.2wt%, for example at least 0.3wt%, for example at least 0.4wt%, for example at least 0.5wt% and/or for example at most 1.0wt%, for example at most 0.7wt% based on the propylene-ethylene copolymer. By using a propylene-ethylene copolymer for the preparation of a tape instead of a propylene homopolymer, processability may be improved.

Within the framework of the invention, with propylene-ethylene copolymer is meant a random propylene-ethylene copolymer.

For a good processing behavior for the preparation of tapes, it is preferred that the polypropylene composition prepared by the process of the invention has an average molecular weight Mw of at least 400 kmol, preferably at least 450kmol and/or preferably of at most 600kmol.

In order to have an acceptable high speed processing behavior in extrusion, it is preferred that the polypropylene composition prepared by the process of the invention has a molecular weight distribution (MWD) of at least 8.0, preferably at least 8.5, more preferably at least 9.0 and/or at most 13.0, for example at most 12.0, preferably at most 11.0, more preferably at most 10.0. Preferably, the polypropylene composition prepared by the process of the invention according to the invention has a molecular weight distribution in the range from 8.0 to 11.0, wherein MWD is calculated by dividing the weight average molecular weight (Mw) by the number average molecular weight (Mn) and wherein Mw and Mn are measured according to ASTM D6474-12.

The Mz/Mn is calculated by dividing the z-average molecular weight (Mz) by the numbe average molecular weight (Mn) and wherein Mz and Mn are measured according to ASTM D6474-12.

For example, the Mz/Mw, that is the z-average molecular weight divided by the Mw, that is the average molecular weight is in the range from 2.7 to 4.5.

The polypropylene composition prepared by the process of the invention has an XS in the range from 0.5 to 3.5wt%, preferably in the range from 0.5 to 3.0wt%, more preferably in the range from 0.1 to 2.5wt% based on the polypropylene composition. XS stands for the amount of xylene solubles which are measured according to ASTM D 5492-10.

It is preferred that the polypropylene composition prepared by the process of the invention has a pentad isotacticity of at least 94 %, preferably of at least 94.5% and preferably of at most 98 % based on the polypropylene composition, wherein the pentad isotacticity is determined using <13>C NMR.

The polypropylene compositon prepared by the process of the invention preferably has a MWD divided by the gelcount 500 of at least 0.9, preferably having an MWD divided by the gelcount 500 of at least 1.0, preferably at least 3.0, preferably of at least 5.0.

The MWD is the molecular weight distribution which is calculated by dividing the weight average molecular weight (Mw) by the number average molecular weight (Mn) and wherein Mw and Mn are measured according to ASTM D6474-12.

The gelcount 500 stands for the gelcount of all particles having an equivalent diameter of at least 500µm as determined according to method as described herein. The gelcount 500 is preferably less than 13.

Gels are to be understood to be distinct polymeric domains in the polymer material that do not show thermoplastic properties, for example wherein individual polymer molecules are chemically bound to each other as a result of crosslinking, or for example wherein polymer molecules of a high molecular weight form physical bonds which are not reversible by exposing the material to a heat processing step such as is the case in thermoplastic processing, for example by forming entanglements and/or dense crystalline domains.

The gel content may for example be determined via on-line measurement of a film produced in the cast film system using an FSA-100 optical film surface analyser equipped with software version 6.3.4.2 obtainable from Optical Control Systems GmbH, in which the surface analyser is positioned between the chill roll system and the nip rolls. The film surface analyser may comprise a CCD line scan camera with a resolution of 50 µm, enabling the identification of gels having a dimension of at least 50 µm length and 50 µm width. The film surface analyser may comprise a halogen based illumination system. A continuous image of the film surface may be produced. The determination of gels may be performed using image recognition software provided by Optical Control Systems GmbH integrated with the FSA-100 film surface analyser. A film sample with a total surface size of ≥ 5.0 m² may be tested, for example a film with a total surface size of 10.0 m². The film thickness may be 10-60 µm, such as 25 µm.

The equivalent diameter of a gel is to be understood to be the average of the length and the width of the surface area of the gel as determined via on-line measurement as described herein. For example, the equivalent diameter may be the average of the largest diameter of a gel and the largest diameter of said gel in a direction perpendicular direction to said largest diameter of said gel. position may further improve the processing of the polypropylene composition and/or may further decrease the gelcount.

Preferably, the polypropylene composition prepared by the process of the invention is unimodal. Unimodality of the polypropylene composition may further improve the processing of the polypropylene composition and/or may further decrease the gelcount.

It is herein understood that the term 'unimodal' means a polypropylene composition which is unimodal with respect to molecular weight distribution, whereby preferably the propylene homopolymer or propylene-ethylene copolymer can be polymerised in a single stage batch or preferably a single reactor in a continuous process. The polymerization can be a slurry or gas phase, preferably a gas phase polymerization.

The polypropylene composition prepared by the process of the invention may further comprise additives. Preferably, the propylene composition prepared by the process of the invention does not comprise polymers other than the propylene homopolymer or the propylene-ethylene copolymer. Preferably, the sum of the amount of additives and the amount of propylene homopolymer or propylene-ethylene copolymer is 100wt% based on the polypropylene composition.

Preferably, the polypropylene composition prepared by the process of the invention has a flexural modulus in parallel orientation of at least 1800MPa, preferably at least 1850MPa, more preferably at least 1900MPa as measured according to ASTM D790-10.

Preferably, the polypropylene composition prepared by the process of the invention has an Izod notched impact strength in parallel orientation of at least 2.5, preferably at least 3.0 kJ/m<2> as measured at 23°C according to ISO 180 4A, Test geometry: 65*12.7*3.2 mm, notch 45° according to ISO 37/2 parallel orientation.

In another aspect, the invention relates to a process for the preparation of the tapes, comprising the process of claim 1.

Such process may further comprise the sequential steps of
extruding the polypropylene composition prepared by the process of the invention into a film (or tape) using a water bath or a chill roller;
optionally slitting the film into a plurality of tapes
heating the tape(s) and stretching the tape(s) and
heat setting the tape(s) at a temperature higher than the previous step to obtain the tape

The person skilled in the art is aware how to prepare a propylene homopolymer or propylene-ethylene copolymer. The preparation of propylene homopolymers and propylene-ethylene copolymers is for example described in Moore, E. P. (1996) Polypropylene Handbook. Polymerization, Characterization, Properties, Processing, Applications, Hanser Publishers: New York.

Polypropylene homopolymers and propylene-ethylene copolymers can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

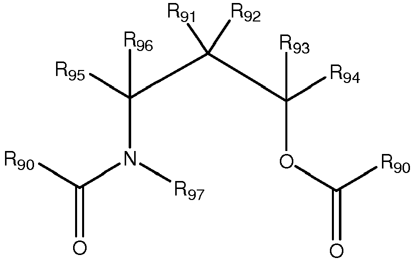

The invention relates to a process for the preparation of a polypropylene composition, comprising the step of
polymerizing propylene and optional ethylene comonomers in the presence of a catalyst to obtain the propylene homopolymer or the propylene-ethylene copolymer, wherein said catalyst is obtainable by a process comprising the steps of
A) providing a Ziegler-Natta procatalyst, wherein step (A) of providing the Ziegler-Natta procatalyst comprises the steps of contacting a magnesium-containing support with
   i) a halogen-containing titanium compound,
   ii) ethylbenzoate as an activator,
   iii) and as internal donor an aminobenzoate compound according to formula B: 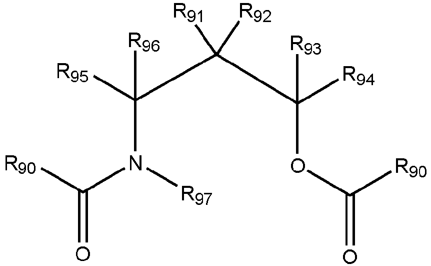 wherein each R⁹⁰ group is independently a substituted or unsubstituted aromatic group; R⁹¹, R⁹², R⁹³, R⁹⁴, R⁹⁵, and R⁹⁶ are each independently selected from a hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms; R⁹⁷ is a hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms; N is a nitrogen atom; O is an oxygen atom; and C is a carbon atom; preferably 4-[benzoyl(methyl)amino]pentan-2-yl benzoate (AB); and
B) contacting said Ziegler-Natta procatalyst obtained in step A) with a co-catalyst and at least one external electron donor to obtain said catalyst;
   preferably wherein step A) to provide the Ziegler-Natta procatalyst comprises the following steps:
   i) contacting a compound R⁴_{z}MgX⁴_{2-z} with an alkoxy- or aryloxy-containing silane compound to give a first intermediate reaction product, being a solid Mg(OR¹)ₓX¹₂₋ₓ, wherein: R⁴ and R¹ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms; X⁴ and X¹ are each independently selected from the group of consisting of fluoride (F-), chloride (Cl-), bromide (Br-) or iodide (I-), preferably chloride; z is in a range of larger than 0 and smaller than 2, being 0 < z < 2, x is in a range of larger than 0 and smaller than 2, being 0 < x < 2;
   ii) optionally contacting the solid Mg(OR¹)ₓX¹₂₋ₓ obtained in step ii) with at least one activating compound selected from the group formed of activating electron donors and metal alkoxide compounds of formula M¹(OR²)_{v-w}(OR³)_{w} or M²(OR²)_{v-w}(R³)_{w}, to obtain a second intermediate product; wherein M¹ is a metal selected from the group consisting of Ti, Zr, Hf, Al or Si; M² is a metal being Si; v is the valency of M¹ or M² and is either 3 or 4; w < v; R² and R³ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms, and preferably has from 1 to 20 carbon atoms;
   iii) contacting the first or second intermediate reaction product, obtained respectively in step i) or ii), with the halogen-containing Ti-compound; the activator; and the internal electron donor to obtain said Ziegler-Natta procatalyst;

Preferably in said process, as external donor in step B) a phthalate free donor, for example di(isopropyl) dimethoxysilane, is used.

A more detailed description of the most preferred catalyst can be found in the patent application with application number PCT/EP2017/073148 as filed on 14 September 2017 at the World Intellectual Property Office.

In case a phthalate-free catalyst, such as the above described catalyst using a phthalate free external donor, is used, the polypropylene composition prepared by the process of the invention is essentially phthalate-free. This is advantageous as more and more consumers try to avoid any contact with phthalates.

Therefore, preferably, the polypropylene composition prepared by the process of the invention as well as any articles comprising such polypropylene composition, such as the tapes prepared by the process of the invention are essentially phthalate-free.

For purposes of the invention, essentially phthalate-free is defined as the presence of less than 0.0001wt% of phthalates based on the polypropylene composition, preferably 0.00000wt% of phthalates based on the polypropylene composition.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

### Examples

### Example 1

### Step A) Butyl Grignard formation

A 1.7 L stirred flask, fitted with a reflux condenser and a
funnel, was filled with magnesium powder (40.0 g, 1.65 mol). The flask was brought under nitrogen. The magnesium was dried at 80°C for 2 hours under nitrogen purge, after which dibutyl ether (200 ml), iodine (0.05 g) and n-chlorobutane (10 ml) were successively added and stirred at 120 rpm. The temperature was maintained at 80°C and a mixture of n-chlorobutane (146 ml) and dibutyl ether (1180 ml) was slowly added over 3 hours. The reaction mixture was stirred for another 3 hours at 80°C. Then the stirring and heating were stopped and the small amount of solid material was allowed to settle for 24 hours. By decanting the colourless solution above the precipitate, a solution of butylmagnesiumchloride with a concentration of 0.90 mol Mg/L was obtained.

### Step B) Preparation of the first intermediate reaction product

The solution of reaction product of step A (500 ml, 0.45 mol Mg) and 260 ml of a solution of tetraethoxysilane (TES) in dibutyl ether (DBE), (47 ml of TES and 213 ml of DBE), were cooled to 5°C, and then were fed simultaneously to a mixing device (minimixer) of 0.45 ml volume equipped with a stirrer and jacket. The minimixer was cooled to 5°C by means of cold water circulating in the minimixer's jacket. The stirring speed in the minimixer was 1000 rpm. From the mixing device, the mixed components were directly dosed into a 1.3 liter reactor fitted with blade stirrer and containing 350 ml of dibutyl ether. The dosing temperature of the reactor was 35 °C and the dosing time was 360 min. The stirring speed in the reactor was 250 rpm at the beginning of dosing and was gradually increased up to 450 rpm at the end of dosing stage. On completion of the dosing, the reaction mixture was heated up to 60°C in 30 minutes and held at this temperature for 1 hour. Then the stirring was stopped and the solid substance was allowed to settle. The supernatant was removed by decanting. The solid substance was washed three times using with 700 ml of heptane at a reactor temperature of 50°C for three times. A pale yellow solid substance, reaction product B (the solid first intermediate reaction product; the support), was obtained upon drying with a nitrogen purge. The average particle size of support was 20 microns.

### Step C) Preparation of the second intermediate reaction product

In inert nitrogen atmosphere at 20°C in a 1000 ml glass flask equipped with a mechanical agitator was filled with 50 g of reaction product B, dispersed in 500 ml of heptane and stirred at 250 rpm. Subsequently, a solution of 2.7 ml ethanol (EtOH/Mg=0.1) in 20 ml heptane was dosed under stirring during 1 hour. After keeping the reaction mixture at 20°C for 30 minutes, a solution of 9.5 ml titanium tetraethoxide (TET/Mg=0.1) in 20 ml of heptane was added for 1 hour. The slurry was slowly allowed to warm up to 30°C over 30 minutes and held at that temperature for another 2 hours. Finally, the supernatant liquid was decanted from the solid reaction product (the second intermediate reaction product C; first activated support) which was washed once with 500 ml of heptane at 30°C and dried using a nitrogen purge.

### Step D) Preparation of the third intermediate reaction product

In inert nitrogen atmosphere at 25°C in a 1000 ml glass flask equipped with a mechanical agitator was filled with 50 g of second intermediate reaction product C dispersed in 500 ml of heptane and stirred at 250 rpm. Subsequently, a solution of 6.3 ml ethanol (EtOH/Mg=0.3), 20.8 ml of toluene and 37.5 ml of heptane was dosed at 25°C under stirring during 1 hour. The slurry was slowly allowed to warm up to 30°C over 30 minutes and held at that temperature for another 3 hours. Finally, the supernatant liquid was decanted from the solid reaction product (the third intermediate reaction product D; second activated support) which was washed once with 500 ml of heptane at 25°C and dried using a nitrogen purge.

### Preparation of the catalyst H

Steps A-D) are carried out as in Example 1. Step E) is carried out as follows.

A 300 ml reactor-filter flask was brought under nitrogen and 125 mL of titanium tetrachloride was added, then 5.5 g of second activated support in 15 ml of heptane was added to the reactor. The contents of the reactor were stirred for 60 minutes at room 25°C. Then, 1.78 ml of ethylbenzoate, EB (EB/Mg=0.30 molar ratio) in 4 ml of chlorobenzene was added to the reactor in 30 minutes. Temperature of reaction mixture was increased to 115°C and then the reaction mixture was stirred at 115°C for 90 minutes (I stage of catalyst preparation). The contents of the flask were filtered, after which the solid product was washed with chlorobenzene (125 ml) at 100 to 105°C for 20 minutes. Then, the contents of the flask were filtered. A mixture of titanium tetrachloride (62.5 ml) and chlorobenzene (62.5 ml) was added to the reactor. The reaction mixture was stirred at 115°C for 60 minutes (II stage of catalyst preparation). Then, the contents of the flask were filtered. A mixture of titanium tetrachloride (62.5 ml) and chlorobenzene (62.5 ml) was added to the reactor. Then, 0.51 g of 4-[benzoyl(methyl)amino]pentan-yl benzoate (AB/Mg = 0.04) in 4 ml of chlorobenzene was added to the reactor in 10 minutes. The reaction mixture was stirred at 115°C for 30 minutes (III stage of catalyst preparation). Then, the contents of the flask were filtered. A mixture of titanium tetrachloride (62.5 ml) and chlorobenzene (62.5 ml) was added to the reactor. The reaction mixture was stirred at 115°C for 30 minutes (IV stage of catalyst preparation). Then, the contents of the flask were filtered. The solid product obtained was washed five times with 125 ml of heptane starting at 60°C with 5 minutes stirring per wash prior to filtration. The temperature was gradually reduced from 60 to 25°C during the washings. Finally, the solid product obtained was dried using a nitrogen purge at a temperature of 25°C for 2 hours. The composition of the solid catalyst H produced is given in Table 1.

**Table 1 Composition of solid catalyst H**

| Catalyst | Example | d50 [µm] | Mg [%] | Ti [%] | ID [%] | Activator (EB) [%] | EtO [%] |
|---|---|---|---|---|---|---|---|
| H | 8 | 22.16 | 19.65 | 2.40 | 8.41 | 6.68 | 1.48 |

### Catalyst CE

Catalyst CE is prepared according to the method disclosed in US 4,866,022, hereby incorporated by reference. This patent discloses a catalyst component comprising a product obtained by: (a) forming a solution of a magnesium-containing species from a magnesium carbonate or a magnesium carboxylate; (b) precipitating solid particles from such magnesium-containing solution by treatment with a transition metal halide and an organosilane having a formula: RₙSiR'₄₋ₙ, wherein n= 0 to 4 and wherein R is hydrogen or an alkyl, a haloalkyl or aryl radical containing one to about ten carbon atoms or a halosilyl radical or haloalkylsilyl radical containing one to about eight carbon atoms, and R' is OR or a halogen; (c) reprecipitating such solid particles from a mixture containing a cyclic ether; and (d) treating the reprecipitated particles with a transition metal compound and an electron donor.

The process was performed in one horizontally stirred gas-phase reactor with downstream powder processing units (= degassing & catalyst deactivation) for powder collection.

The reactor was operated at an average of 70°C at 25 bar. H2/C3 ratios in both reactors were controlled such to obtain a powder having the desired melt flow rate (MFR).

The catalyst was dosed through a nozzle to the reactor. Cocatalyst (triethylaluminium, TEAI) and External Donor (DIPDMS or DiBDMS) were dosed via a separate nozzle to the reactor (as a premixed mixture) and in ratio to the catalyst flow.

The process conditions as given in Table 2 were used:

**Table 2. Process conditions.**

| | catalyst | donor | Al/Mg (mol/mol) | Al/Si (mol/mol) | Si/Ti (mol/mol) | H₂/C₃ (mol/mol) |
|---|---|---|---|---|---|---|
| Example 1 | H | DiPDMS | 4 | 7 | 8 | 0.009 |
| Comparative example 1 (CE1) | CE | DiBDMS | 4 | 12 | 5 | 0.0008 |
| DiPDMS : di-(isopropyl)-dimethoxysilane | | | | | | |
| DiBDMS: di(isobutyl)-dimethoxysilane | | | | | | |

The powder was collected and granulate was prepared by melt-mixing the powder with the appropriate additives in a single screw extruder. The additives (antioxidants, acid scavengers) were used in an amount of 1400 ppm based on the powder and mixed prior to dosing to the extruder. The temperature profile in the extruder was 20-20-30-50-100-170-220-220-240° C, at a throughput of 13 kg/h at 200 rpm.

### Methods

All of the below properties were measured on the granulate.

### Mz, Mn, Mw

Mw, Mn and Mz were all measured in accordance with ASTM D6474-12 (Standard Test Method for Determining Molecular Weight Distribution and Molecular Weight Averages of Polyolefins by High Temperature Gel Permeation Chromatography). Mw stands for the weight average molecular weight and Mn stands for the number average weight. Mz stands for the z-average molecular weight.

In addition to the method specified by ASTM D6474-12, the method was performed using a configuration in which a Polymer Char IR5 infrared concentration detector and a Polymer Char online viscosity detector was used to gain 'absolute' or accurate molar masses. Three columns of Polymer Laboratories 13 µm PLgel Olexis, 300 x 7.5 mm were used in series with 1,2,4-trichlorobenzene stabilized with 1g/L butylhydroxytoluene (also known as 2,6-di-*tert*-butyl-4-methylphenol or BHT) as eluens. The molar mass was determined based on a calibration using linear PE standards (narrow and broad (Mw/Mn = 4 to 15)) in the range of 0.5 - 2800 kg/mol . Samples of polymer granules were mixed with Tris (2,4-di-tert-butylphenyl)phosphite (Irgafos 168) and 1,1,3-Tris (2-methyl-4-hydroxy-5-tert-butylphenyl)butane (Topanol CA) in a weight ratio sample : Irgafos : Topanol of 1:1:1, after which the mixture thus obtained was dissolved in 1,2,4-trichlorobenzene stabilized with 1g/L BHT until the concentration of the mixture in 1,2,3-trichlorobenzene stabilized with 1g/L BHT was 0.03 wt%.

### xylene solubles (XS)

- XS, wt% is xylene solubles, measured according to ASTM D 5492-10. 1 gram of polymer and 100 ml of xylene are introduced in a glass flask equipped with a magnetic stirrer. The temperature is raised up to the boiling point of the solvent. The so obtained clear solution is then kept under reflux and stirring for further 15 min. Heating is stopped and the isolating plate between heating and flask is removed. Cooling takes places with stirring for 5 min. The closed flask is then kept for 30 min in a thermostatic water bath at 25°C for 30 min. The so formed solid is filtered on filtering paper. 25 ml of the filtered liquid is poured in a previously weighed aluminium container, which is heated in a stove of 140°C for at least 2 hours, under nitrogen flow and vacuum, to remove the solvent by evaporation. The container is then kept in an oven at 140°C under vacuum until constant weight is obtained. The weight percentage of polymer soluble in xylene at room temperature is then calculated.

### pentad isotacticity

175 mg of the polypropylene granules was dissolved in 3 ml at 130°C in deuterated tetrachloroethylene (C₂D₂Cl₄) containing 2,6-Di-tert-butyl-4-methylphenol (BHT) (5 mg BHT in 200 ml C₂D₂Cl₄). The ¹³C NMR spectrum was recorded on a Bruker Avance 500 spectrometer equipped with a cryogenically cooled probe head operating at 125°C.

The isotacticity of the mmmm pentad levels was determined from the ¹³C NMR spectrum in % based on the total pentad amount.

### Melt flow rate (MFR)

For purpose of the invention the melt flow rate is the melt flow rate as measured according to ISO1133 (2.16 kg/230°C).

### Tm and Tc measurement

The crystallization temperature, the crystallinity and the melting temperature are measured according to ASTM D3418-08 at a heating rate of 10 °C/min in DSC. The sample is heated up to 200 °C (first heating) and then cooled at a cooling rate 10 °C/min of (to measure the crystallization temperature Tc) and then heated a second time at a heating rate of 10 °C/min (second heating) to measure the melting temperature (Tm). For the determination of Tc and Tm, a 5 mg polymer sample was measured.

### production of films

The granulate obtained was processed into single-layer films having a thickness of 25 µm by using a ME-20 extruder and a CR-7 cast film system obtainable from Optical Control Systems GmbH. The extruder was operated at a screw speed of 50 rpm, with a temperature profile along the extruder screw of 190°C in the material feed zone to 250°C in the die zone. The extruder was equipped with a slit die. The width of the die opening was 100 mm. The die gap was in the range from 0.50 to 1.0 mm.

The cast film system comprised a dual chrome plated steel chill roll system having a temperature control system. The chill roll was operated at a temperature of 20°C. The cast film system comprised two rubber nip rolls to pull the film. The speed of the cast film system was controlled by the nip rolls to produce film at a speed of 7.6 m/min.

### Gel content determination

The gel content was determined via on-line measurement of the film in the cast film system using an FSA-100 film surface analyser obtainable from Optical Control Systems GmbH software version 6.3.4.2, wherein the surface analyser is positioned between the chill roll system and the nip rolls. The film surface analyser comprised a CCD line scan camera with a resolution of 50 µm. The smallest defects that could be identified accordingly had a dimension of 50 µm length and 50 µm width. The film surface analyser comprised halogen based illumination system. A continuous image of the film surface was thus produced. The determination of defects was performed using image recognition software provided by Optical Control Systems GmbH integrated with the FSA-100 film surface analyser. A film sample with a total surface size of 10.0 m² was tested.

The number of gels having an equivalent diameter of >100µm, >200 µm and of > 500 µm and of > 900 µm were reported.

### Flex. Modulus (parallel orientation).

For purpose of the present invention, stiffness of the granulate is determined by measuring the flexural modulus according to ASTM D790-10. Flexural modulus was determined on 3.2mm thick specimens according to ISO37/2, parallel orientation.

### Izod notched impact strength (parallel orientation)

For purpose of the present invention, impact strength is determined by measuring the Izod notched impact strength of the granulate at 23°C according to ISO 180 4A, Test geometry: 65*12.7*3.2 mm, notch 45° according to ISO 37/2 parallel orientation.

### Conclusion

As can be seen from Table 3, the polypropylene compositions prepared by the process of the invention show a lower gel count and have a higher stiffness and maintain their impact strength, which allows for the preparation of thinner tapes without decreasing the properties of the tape.

In particular, when a phthalate free external donor is used, the polypropylene composition prepared by the process of the invention could be suitably used for applications where consumer acceptance of phthalate containing products is low, for example in food and medical applications.

**Table 3. Results**

| Example | IE1 | CE1 |
|---|---|---|
| Mw (kDa) | 460 | 440 |
| Mn (kDa) | 48 | 75 |
| Mz (kDa) | 1400 | 1100 |
| Mz/Mw | 3.1 | 2.6 |
| Mz/Mn | 29.2 | 14.7 |
| MWD = Mw/Mn | 9.6 | 5.9 |
| XS (wt%) | 2.1 | 2.3 |
| Pentad isotacticity (%) | 96.0 | 94.1 |
| Tm (2^{nd} heating), (°C) | 163.3 | 162.0 |
| Tc (2^{nd} cooling), °C | 111.8 | 111.7 |
| MFR (g/10min) | 1.3 | 1.0 |
| | | |
| properties | | |
| Gel count > 200µm | 2.10 | 49 |
| Gel count > 500 µm | 0.3 | 7.8 |
| Gel count > 900µm | 0.2 | 2.1 |
| MWD/gelcount > 500 µm | 32 | 0.76 |
| Cumulative gel count is gel county >100 µm | 49.7 | 170.2 |
| flex modulus (parallel orientation) (MPa) | 1934 | 1742 |
| Izod notched Impact strength (parallel orientation) (kJ/m²) | 3.2 | 3.4 |

## Claims

1. Process for the preparation of a polypropylene composition comprising a propylene homopolymer or propylene-ethylene copolymer having an ethylene content of at most 1.0 wt% based on the propylene-ethylene copolymer wherein the amount of propylene homopolymer or propylene-ethylene copolymer is at least 98wt%, for example at least 98.5wt%, preferably at least 99wt%, more preferably at least 99.5, for example at least 99.75wt% based on the polypropylene composition wherein the polypropylene composition has
- a melt flow rate in the range of 0.70 to 2.4 dg/min as measured according to ISO1133 (2.16 kg/230°C)
- an Mw/Mn in the range from 8.0 to 13.0, wherein Mw stands for the weight average molecular weight and Mn stands for the number average weight
- an Mz/Mn is in the range from 20 to 50, wherein Mz stands for the z-average molecular weight
and wherein Mw, Mn and Mz are measured according to ASTM D6474-12,
the process comprising the step of
polymerizing propylene and optional ethylene comonomers in the presence of a catalyst, preferably in the gas phase to obtain the propylene homopolymer or the propylene-ethylene copolymer, wherein said catalyst is obtainable by a process comprising the steps of
A) providing a Ziegler-Natta procatalyst, wherein step (A) of providing the Ziegler-Natta procatalyst comprises the steps of contacting a magnesium-containing support with
i) a halogen-containing titanium compound,
ii) ethylbenzoate as an activator,
iii) and as internal donor an aminobenzoate compound according to formula B: 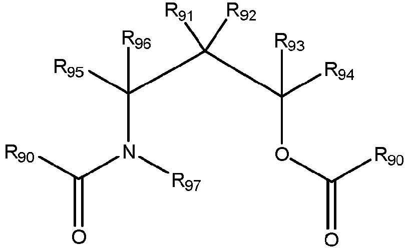 wherein each R⁹⁰ group is independently a substituted or unsubstituted aromatic group; R⁹¹, R⁹², R⁹³, R⁹⁴, R⁹⁵, and R⁹⁶ are each independently selected from a hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms; R⁹⁷ is a hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms; N is a nitrogen atom; O is an oxygen atom; and C is a carbon atom; preferably 4-[benzoyl(methyl)amino]pentan-2-yl benzoate (AB); and
B) contacting said Ziegler-Natta procatalyst obtained in step A) with a cocatalyst and at least one external electron donor to obtain said catalyst;
preferably wherein step A) to provide the Ziegler-Natta procatalyst comprises the following steps:
i) contacting a compound R⁴_{z}MgX⁴_{2-z} with an alkoxy- or aryloxy-containing silane compound to give a first intermediate reaction product, being a solid Mg(OR¹)ₓX¹₂₋ₓ, wherein: R⁴ and R¹ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms; X⁴ and X¹ are each independently selected from the group of consisting of fluoride (F-), chloride (CI-), bromide (Br-) or iodide (I-), preferably chloride; z is in a range of larger than 0 and smaller than 2, being 0 < z < 2, x is in a range of larger than 0 and smaller than 2, being 0 < x < 2;
ii) optionally contacting the solid Mg(OR¹)ₓX¹₂₋ₓ obtained in step ii) with at least one activating compound selected from the group formed of activating electron donors and metal alkoxide compounds of formula M¹(OR²)_{v-w}(OR³)_{w} or M²(OR²)_{v-w}(R³)_{w}, to obtain a second intermediate product; wherein M¹ is a metal selected from the group consisting of Ti, Zr, Hf, Al or Si; M² is a metal being Si; v is the valency of M¹ or M² and is either 3 or 4; w < v; R² and R³ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms, and preferably has from 1 to 20 carbon atoms;
iii) contacting the first or second intermediate reaction product, obtained respectively in step i) or ii), with the halogen-containing Ti-compound; the activator; and the internal electron donor to obtain said Ziegler-Natta procatalyst;.

2. Process according to claim 1, wherein the polypropylene composition has a melt flow rate in the range of 0.70 to 2.3dg/min as measured according to ISO1133 (2.16 kg/230°C).

3. Process according to claim 1 or claim 2, wherein the composition has an amount of xylene soluble amount (XS) as measured according to ASTM D 5492-10 in the range from 0.5 to 3.5 wt%.

4. Process according to any of claims 1-3, wherein the composition has a pentad isotacticity of at least 94 % and preferably at most 98 % based on the composition, wherein the isotacticity is determined using ¹³C NMR.

5. Process according to any one of claims 1-4, wherein the composition has a MWD divided by the gelcount 500 of at least 0.9
wherein MWD is calculated by dividing the weight average molecular weight (Mw) by the number average molecular weight (Mn) and wherein Mw and Mn are measured according to ASTM D6474-12 and wherein the gelcount 500 stands for the gelcount all particles having an equivalent diameter of at least 500µm.

6. Process according to any one of claims 1-5, wherein the composition is unimodal.

7. Process according to any one of claims 1-6, wherein the polypropylene composition further comprises additives, and wherein sum of the amount of additives and the amount of propylene homopolymer or propylene-ethylene copolymer is 100wt% based on the polypropylene composition.

8. Process according to any one of claims 1-7, wherein the polypropylene composition has a flexural modulus in parallel orientation of at least 1800MPa, preferably at least 1850MPa, more preferably at least 1900MPa as measured according to ASTM D790-10.

9. Process according to any one of claims 1-8, wherein the polypropylene composition has an Izod notched impact strength in parallel orientation of at least 2.5, preferably at least 3.0 kJ/m² as measured at 23°C according to ISO 180 4A.

10. Process according to any one of claims 1-9 has an Mz/Mw is in the range from 2.7 to 4.5.

11. Process for the preparation of tapes including strapping tapes, comprising the process of any one of claims 1-10.

12. Process according to any one of claims 1-11, wherein as external donor in step B) a phthalate free donor, for example di(isopropyl) dimethoxysilane is used.

## Patentansprüche

1. Verfahren zur Herstellung einer Polypropylenzusammensetzung, umfassend ein Propylenhomopolymer oder Propylen-Ethylen-Copolymer mit einem Ethylengehalt von höchstens 1,0 Gew.-%, bezogen auf das Propylen-Ethylen-Copolymer,
wobei die Menge an Propylenhomopolymer oder Propylen-Ethylen-Copolymer mindestens 98 Gew.-%, beispielsweise mindestens 98,5 Gew.-%, bevorzugt mindestens 99 Gew.-%, bevorzugter mindestens 99,5, beispielsweise mindestens 99,75 Gew.-% beträgt, bezogen auf die Polypropylenzusammensetzung, wobei die Polypropylenzusammensetzung Folgendes aufweist:
- eine Schmelzflussrate im Bereich von 0,70 bis 2,4 dg/min, gemessen gemäß ISO 1133 (2,16 kg/230 °C)
- ein Mw/Mn im Bereich von 8,0 bis 13,0, wobei Mw für die gewichtsmittlere Molmasse und Mn für die zahlenmittlere Masse steht
- ein Mz/Mn im Bereich von 20 bis 50, wobei Mz für die z-mittlere Molmasse steht
und wobei Mw, Mn und Mz gemäß ASTM D6474-12 gemessen werden, das Verfahren umfassend den Schritt des Polymerisierens von Propylen und optionalen Ethylencomonomeren in Gegenwart eines Katalysators, vorzugsweise in der Gasphase, um das Propylenhomopolymer oder das Propylen-Ethylen-Copolymer zu erhalten, wobei der Katalysator durch ein Verfahren erhältlich ist, das folgende Schritte umfasst:
a) Bereitstellen eines Ziegler-Natta-Prokatalysators, wobei Schritt (A) des Bereitstellens des Ziegler-Natta-Prokatalysators die Schritte des Inkontaktbringens eines magnesiumhaltigen Trägers mit Folgenden umfasst
i) einer halogenhaltigen Titanverbindung,
ii) Ethylbenzoat als Aktivator,
iii) und als internen Donor einer Aminobenzoatverbindung gemäß Formel B: 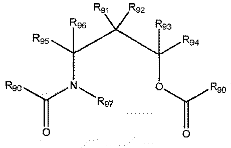 wobei jede R⁹⁰-Gruppe unabhängig eine substituierte oder unsubstituierte aromatische Gruppe ist; R⁹¹, R⁹², R⁹³, R⁹⁴, R⁹⁵ und R⁹⁶ jeweils unabhängig ausgewählt sind aus Wasserstoff oder einer linearen, verzweigten oder cyclischen Kohlenwasserstoffgruppe, ausgewählt aus Alkyl-, Alkenyl-, Aryl-, Aralkyl- oder Alkylarylgruppen, und einer oder mehreren Kombinationen davon, vorzugsweise mit 1 bis 20 Kohlenstoffatomen; R⁹⁷ ein Wasserstoff oder eine lineare, verzweigte oder cyclische Kohlenwasserstoffgruppe ist, ausgewählt aus Alkyl-, Alkenyl-, Aryl-, Aralkyl-, Alkoxycarbonyl- oder Alkylarylgruppen und einer oder mehreren Kombinationen davon, vorzugsweise mit 1 bis 20 Kohlenstoffatomen; N ein Stickstoffatom ist; O ein Sauerstoffatom ist; und C ein Kohlenstoffatom ist; vorzugsweise 4-[Benzoyl(methyl)amino]pentan-2-ylbenzoat (AB); und
b) Inkontaktbringen des in Schritt A) erhaltenen Ziegler-Natta-Prokatalysators mit einem Cokatalysator und mindestens einem externen Elektronendonor, um den Katalysator zu erhalten;
wobei Schritt A) zur Bereitstellung des Ziegler-Natta-Prokatalysators bevorzugt die folgenden Schritte umfasst:
i) Inkontaktbringen einer Verbindung R⁴_{z}MgX⁴_{2-z} mit einer alkoxy- oder aryloxyhaltigen Silanverbindung, um ein erstes Reaktionszwischenprodukt zu erhalten, bei dem es sich um festes Mg(OR¹)ₓX¹₂₋ₓ handelt, wobei: R⁴ und R¹ jeweils eine lineare, verzweigte oder cyclische Kohlenwasserstoffgruppe sind, unabhängig aus der Gruppe bestehend aus Alkyl-, Alkenyl-, Aryl-, Aralkyl-, Alkoxycarbonyl- oder Alkylarylgruppen und einer oder mehreren Kombinationen davon ausgewählt; wobei die Kohlenwasserstoffgruppe substituiert oder unsubstituiert sein kann, eines oder mehrere Heteroatome enthalten kann und bevorzugt 1 bis 20 Kohlenstoffatome aufweist; X⁴ und X¹ jeweils unabhängig aus der Gruppe bestehend aus Fluorid (F-), Chlorid (CI-), Bromid (Br-) oder lodid (I-), bevorzugt Chlorid, ausgewählt sind; z in einem Bereich über 0 und unter 2 liegt, wobei 0 < z < 2; x in einem Bereich über 0 und unter 2 liegt, wobei 0 < x < 2;
ii) optional Inkontaktbringen des in Schritt ii) erhaltenen festen Mg(OR¹)ₓX¹₂₋ₓ mit mindestens einer aktivierenden Verbindung, ausgewählt aus der Gruppe, die aus aktivierenden Elektronendonoren und Metallalkoxidverbindungen der Formel M¹(OR^{Z})_{v-w}(OR³)_{w} oder M²(OR²)_{v-w}(R³)_{w} gebildet ist, um ein zweites Zwischenprodukt zu erhalten; wobei M1 ein Metall ist, ausgewählt aus der Gruppe bestehend aus Ti, Zr, Hf, Al oder Si; M² ein Metall ist, bei dem es sich um Si handelt; v die Wertigkeit von M¹ oder M² und entweder 3 oder 4 ist; w < v; R² und R³ jeweils eine lineare, verzweigte oder cyclische Kohlenwasserstoffgruppe sind, unabhängig ausgewählt aus Alkyl-, Alkenyl-, Aryl-, Aralkyl-, Alkoxycarbonyl- oder Alkylarylgruppen und einer oder mehreren Kombinationen davon; wobei die Kohlenwasserstoffgruppe substituiert oder unsubstituiert sein kann, ein oder mehrere Heteroatome enthalten kann und bevorzugt 1 bis 20 Kohlenstoffatome aufweist;
iii) Inkontaktbringen des ersten oder zweiten Zwischenreaktionsprodukts, das in Schritt i) bzw. ii) erhalten wurde, mit der halogenhaltigen Ti-Verbindung; dem Aktivator; und dem internen Elektronendonor, um den Ziegler-Natta-Prokatalysator zu erhalten;

2. Verfahren nach Anspruch 1, wobei die Polypropylenzusammensetzung eine Schmelzflussrate im Bereich von 0,70 bis 2,3 dg/min, gemessen gemäß ISO 1133 (2,16 kg/230 °C) aufweist.

3. Verfahren nach Anspruch 1 oder Anspruch 2, wobei die Zusammensetzung eine xylollösliche Menge (XS), gemessen gemäß ASTM D 5492-10, im Bereich von 0,5 bis 3,5 Gew.-% aufweist.

4. Verfahren nach einem der Ansprüche 1 bis 3, wobei die Zusammensetzung eine Pentad-Isotaktizität von mindestens 94 % und vorzugsweise höchstens 98 %, bezogen auf die Zusammensetzung, aufweist, wobei die Isotaktizität mithilfe von ¹³C-NMR bestimmt wird.

5. Verfahren nach einem der Ansprüche 1 bis 4, wobei die Zusammensetzung eine durch die Gelzahl 500 dividierte MWD von mindestens 0,9 aufweist,
wobei MWD durch Division der gewichtsmittleren Molmasse (Mw) durch die zahlenmittlere Molmasse (Mn) berechnet wird und wobei Mw und Mn gemäß ASTM D6474-12 gemessen werden und wobei die Gelzahl 500 für die Gelzahl aller Partikel steht, die einen äquivalenten Durchmesser von mindestens 500 µm aufweisen.

6. Verfahren nach einem der Ansprüche 1 bis 5, wobei die Zusammensetzung unimodal ist.

7. Verfahren nach einem der Ansprüche 1 bis 6, wobei die Polypropylenzusammensetzung ferner Additive umfasst, und wobei die Summe der Menge an Additiven und der Menge an Propylenhomopolymer oder Propylen-Ethylen-Copolymer 100 Gew.-%, bezogen auf die Polypropylenzusammensetzung, beträgt.

8. Verfahren nach einem der Ansprüche 1 bis 7, wobei die Polypropylenzusammensetzung ein Biegemodul in paralleler Ausrichtung von mindestens 1800 MPa, vorzugsweise mindestens 1850 MPa, besonders bevorzugt von mindestens 1900 MPa, gemessen gemäß ASTM D790-10, aufweist.

9. Verfahren nach einem der Ansprüche 1 bis 8, wobei die Polypropylenzusammensetzung eine Izod-Kerbschlagzähigkeit in paralleler Ausrichtung von mindestens 2,5, vorzugsweise mindestens 3,0 kJ/m², gemessen bei 23 °C gemäß ISO 180 4A.

10. Verfahren nach einem der Ansprüche 1 bis 9, die ein Mz/Mw im Bereich von 2,7 bis 4,5 aufweist.

11. Verfahren zur Herstellung von Bändern, einschließlich Umreifungsbändern, umfassend das Verfahren nach einem der Ansprüche 1 bis 10.

12. Verfahren nach einem der Ansprüche 1 bis 11, wobei als externer Donor in Schritt B) ein phthalatfreier Donor, beispielsweise Di(isopropyl)dimethoxysilan, verwendet wird.

## Revendications

1. Procédé de préparation d'une composition de polypropylène comprenant un homopolymère de propylène ou un copolymère de propylène-éthylène ayant une teneur en éthylène d'au plus 1,0% en poids sur la base du copolymère de propylène-éthylène
dans laquelle la quantité d'homopolymère de propylène ou de copolymère de propylène-éthylène est d'au moins 98% en poids, par exemple d'au moins 98,5% en poids, de préférence d'au moins 99% en poids, plus préférablement d'au moins 99,5, par exemple d'au moins 99,75% en poids, sur la base de la composition de polypropylène dans laquelle la composition de polypropylène présente
- un indice de fluidité dans la plage allant de 0,70 à 2,4 dg/min tel que mesuré selon la norme ISO1133 (2,16 kg/230°C)
- un rapport Mw/Mn dans la plage allant de 8,0 à 13,0, où Mw représente le poids moléculaire moyen en poids et Mn représente le poids moyen en nombre
- un rapport Mz/Mn dans la plage allant de 20 à 50, où Mz représente le poids moléculaire moyen z
et dans lequel Mw, Mn et Mz sont mesurés selon la norme ASTM D6474-12, le procédé comprenant l'étape de polymérisation de propylène et de comonomères d'éthylène facultatifs en présence d'un catalyseur, de préférence en phase gazeuse pour obtenir l'homopolymère de propylène ou le copolymère de propylène-éthylène, où ledit catalyseur peut être obtenu par un procédé comprenant les étapes de
a) fourniture d'un procatalyseur Ziegler-Natta, où l'étape (A) de fourniture du procatalyseur Ziegler-Natta comprend les étapes de mise en contact d'un support contenant du magnésium avec
i) un composé titane contenant un halogène,
ii) de l'éthylbenzoate comme activateur,
iii) et comme donneur interne un composé aminobenzoate selon la formule B : 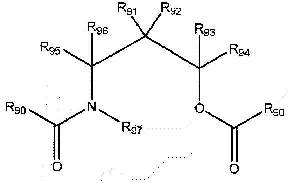 dans laquelle chaque groupe R⁹⁰ est indépendamment un groupe aromatique substitué ou non substitué ; R⁹¹, R⁹², R⁹³, R⁹⁴, R⁹⁵ et R⁹⁶ sont chacun indépendamment choisis parmi un hydrogène ou un groupe hydrocarbyle linéaire, ramifié ou cyclique, choisi parmi les groupes alkyle, alcényle, aryle, aralkyle ou alkylaryle, et une ou plusieurs combinaisons de ceux-ci, ayant de préférence de 1 à 20 atomes de carbone ; R⁹⁷ est un hydrogène ou un groupe hydrocarbyle linéaire, ramifié ou cyclique, choisi parmi les groupes alkyle, alcényle, aryle, aralkyle, alcoxycarbonyle ou alkylaryle, et une ou plusieurs combinaisons de ceux-ci, ayant de préférence de 1 à 20 atomes de carbone ; N est un atome d'azote ; O est un atome d'oxygène ; et C est un atome de carbone ; de préférence le benzoate de 4-[benzoyl(méthyl)amino]pentan-2-yle (AB) ; et
b) mise en contact dudit procatalyseur Ziegler-Natta obtenu à l'étape A) avec un co-catalyseur et au moins un donneur d'électrons externe pour obtenir ledit catalyseur ;
de préférence, où l'étape A) pour fournir le procatalyseur Ziegler-Natta comprend les étapes suivantes :
i) la mise en contact d'un composé R⁴_{z}MgX⁴_{2-z} avec un composé silane contenant un alcoxy ou un aryloxy pour donner un premier produit de réaction intermédiaire, qui est un solide Mg(OR¹)ₓX¹₂₋ₓ, où : R⁴ et R¹ sont chacun un groupe hydrocarbyle linéaire, ramifié ou cyclique choisi indépendamment parmi les groupes alkyle, alcényle, aryle, aralkyle, alcoxycarbonyle ou alkylaryle, et une ou plusieurs combinaisons de ceux-ci ; où ledit groupe hydrocarbyle peut être substitué ou non substitué, peut contenir un ou plusieurs hétéroatomes et a de préférence de 1 à 20 atomes de carbone ; X⁴ et X¹ sont chacun indépendamment choisis dans le groupe constitué par le fluorure (F-), le chlorure (CI-), le bromure (Br-) ou l'iodure (I-), de préférence le chlorure ; z est dans une plage supérieure à 0 et inférieure à 2, soit 0 < z < 2, x est dans une plage supérieure à 0 et inférieure à 2, soit 0 < x < 2 ;
ii) éventuellement la mise en contact du solide Mg(OR¹)ₓX¹₂₋ₓ obtenu à l'étape ii) avec au moins un composé activateur choisi dans le groupe formé des donneurs d'électrons activateurs et des composés alcoxyde métalliques de formule M¹(OR²)_{v-w}(OR³)_{w} ou M²(OR²)_{v-w}(R³)_{w}, pour obtenir un deuxième produit intermédiaire ; où M¹ est un métal choisi dans le groupe constitué par Ti, Zr, Hf, Al ou Si ; M² est un métal qui est Si ; v est la valence de M¹ ou M² et vaut 3 ou 4 ; w <v; R² et R³ sont chacun un groupe hydrocarbyle linéaire, ramifié ou cyclique indépendamment choisi parmi les groupes alkyle, alcényle, aryle, aralkyle, alcoxycarbonyle ou alkylaryle, et une ou plusieurs combinaisons de ceux-ci ; où ledit groupe hydrocarbyle peut être substitué ou non substitué, peut contenir un ou plusieurs hétéroatomes et a de préférence de 1 à 20 atomes de carbone ;
iii) la mise en contact du premier ou deuxième produit de réaction intermédiaire, obtenu respectivement à l'étape i) ou ii), avec le composé Ti contenant un halogène ; l'activateur ; et le donneur d'électrons interne pour obtenir ledit procatalyseur Ziegler-Natta ;

2. Procédé selon la revendication 1, dans lequel la composition de polypropylène présente un indice de fluidité dans la plage allant de 0,70 à 2,3 dg/min tel que mesuré selon la norme ISO1133 (2,16 kg/230°C).

3. Procédé selon la revendication 1 ou la revendication 2, dans lequel la composition a une quantité de fractions solubles dans le xylène (XS) telle que mesurée selon la norme ASTM D 5492-10 dans la plage allant de 0,5 à 3,5% en poids.

4. Procédé selon l'une des revendications 1-3, dans lequel la composition a une isotacticité de pentade d'au moins 94% et de préférence d'au plus 98% sur la base de la composition, dans laquelle l'isotacticité est déterminée en utilisant RMN ¹³C.

5. Procédé selon l'une quelconque des revendications 1-4, dans lequel la composition a une MWD divisée par le gelcount 500 d'au moins 0,9
dans lequel MWD est calculée en divisant le poids moléculaire moyen en poids (Mw) par le poids moléculaire moyen en nombre (Mn) et dans laquelle Mw et Mn sont mesurés selon la norme ASTM D6474-12 et dans laquelle le gelcount 500 représente le gelcount de toutes les particules ayant un diamètre équivalent d'au moins 500 µm.

6. Procédé selon l'une quelconque des revendications 1-5, dans lequel la composition est unimodale.

7. Procédé selon l'une quelconque des revendications 1-6, dans lequel la composition de polypropylène comprend en outre des additifs, et dans lequel la somme de la quantité d'additifs et de la quantité d'homopolymère de propylène ou de copolymère de propylène-éthylène est de 100% en poids sur la base de la composition de polypropylène.

8. Procédé selon l'une quelconque des revendications 1-7, dans lequel la composition de polypropylène présente un module de flexion dans une orientation parallèle d'au moins 1800 MPa, de préférence d'au moins 1850 MPa, plus préférablement d'au moins 1900 MPa tel que mesuré selon la norme ASTM D790-10.

9. Procédé selon l'une quelconque des revendications 1-8, dans lequel la composition de polypropylène présente une résistance au choc Izod sur barreau entaillé dans une orientation parallèle d'au moins 2,5, de préférence d'au moins 3,0 kJ/m² telle que mesurée à 23°C selon la norme ISO 180 4A.

10. Procédé selon l'une quelconque des revendications 1-9 ayant un rapport Mz/Mw dans la plage allant de 2,7 à 4,5.

11. Procédé de préparation de bandes, y compris des bandes de cerclage, comprenant le procédé selon l'un quelconque des revendications 1-10

12. Procédé selon l'une quelconque des revendications 1-11, dans lequel comme donneur externe dans l'étape B) un donneur sans phtalate, par exemple le di(isopropyl)diméthoxysilane est utilisé.
